Europäisches Patentamt

European Patent Office

Office européen des brevets

(11) Publication number: **0 200 235**
**B1**

(12) **EUROPEAN PATENT SPECIFICATION**

(45) Date of publication of patent specification: **07.11.90**

(51) Int. Cl.⁵: **G 01 N 35/08**

(21) Application number: **86106839.3**

(22) Date of filing: **11.11.83**

(60) Publication number of the earlier application in accordance with Art. 76 EPC: **0 109 278**

(54) Continuous flow method.

(30) Priority: **15.11.82 US 441881**

(43) Date of publication of application:
**05.11.86 Bulletin 86/45**

(45) Publication of the grant of the patent:
**07.11.90 Bulletin 90/45**

(84) Designated Contracting States:
**BE CH DE FR GB IT LI NL SE**

(56) References cited:
**US-A-3 826 615**
**US-A-4 253 846**

(73) Proprietor: **TECHNICON INSTRUMENTS CORPORATION(a Delaware corporation)**
**511 Benedict Avenue**
**Tarrytown, New York 10591-6097 (US)**

(72) Inventor: **Saros, Stephen**
**1249 Hawthorne Drive West**
**Wantagh New York 11793 (US)**
Inventor: **Smith, John L.**
**420 North Pinetop Place**
**Bethlehem Pennsylvania 18017 (US)**
Inventor: **Cassaday, Michael M.**
**929 Paulding Street**
**Peekskill New York 10566 (US)**
Inventor: **Herron, Rand E.**
**56 Old Highway**
**Wilton Connecticut 06897 (US)**
Inventor: **Pelavin, Milton H.**
**31 Whitlaw Lane**
**Chappaqua New York 10514 (US)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

**Description**

The present invention relates to a continuous flow method which is particularly useful for mixing liquid samples, during flow in a conduit, with previously separately flowing processing liquids, such as reagents or diluents, in continuous flow analyzers.

The analysis of liquid samples as a flowing stream is described by Skeggs in U.S. patents nos. 2,797,149 and 2,879,141. The liquid samples are sequentially aspirated from storage containers into a conduit, each sample being separated from the next sample by a segment of air. Air is also introduced between successive segments of each individual sample to promote intrasample mixing, as well as between samples to prevent intersample contamination. Such air/sample sequences can be alternated with air/wash liquid sequences to further ensure against carryover. As illustrated by Ferrari in U.S. patent no. 2,933,293, a junction can be provided in the conduit, at which junction a processing liquid, such as a reagent, can be continuously introduced into the alternating sequence of air and sample segments and also, into wash segments when present. In apparatus such as that described above, the fluid stream containing air segments and segments of combined sample and processing fluid can be "debubbled" immediately before entering a flow cell through which the reacted samples are read. Thus, upon removal of the air segments, the successive sample segments contact one another just before entry into the flow cell. The debubbler is positioned adjacent to the flow cell to prevent undesirable intermixing between liquid segments. Alternatively, as in high throughput systems, the debubbler can be omitted and the air segments can be passed through the flow cell.

Smythe et al. U.S. patent no. 3826615 describes a continuous flow method of analysis according to the preamble of claim 1 in which sample segments separated by (first) air segments are flowed in a conduit to a junction where, by careful phasing, they mix with reagent or diluent segments also separated by (second) air segments supplied from a second conduit. The resulting combined stream, in which said first air segments no longer occlude the internal diameter of said second conduit and thus do not serve to separate any segment in said second conduit, and in which some of the previously separated sample segments have been allow to mix, is then passed to a mixing coil and subsequently debubbled and analysed.

U.S. patent no. 3,109,713 also describes a method in which processing fluids, such as reagents, are continuously introduced into a stream of alternating air and sample segments, at a junction of conduits. A series of substantially identical segments of a single processed sample is then passed through a debubbler. The air is abstracted to consolidate and blend the segments of processed liquid which are passed through a flow cell. Debubbling and blending is done to prevent disruption of colorimeter operation by the optical properties of the air bubbles.

Smythe et al, U.S. patent no. 3,804,593 describes a method of analysis in which a first tube receives samples from vessels on a turntable and a second tube receives reagent liquid from a stationary reagent container. Both tubes are simultaneously inserted into their respective containers repeatedly to provide a flowing stream of segments of liquid sample interspersed by air segments, and a similarly segmented stream of reagent. These streams are merged to form an alternating sequence of air and sample/reagent segments which are then analyzed. As in the other patents referred to above, each of the samples is reacted on-line with only a single reagent, the reaction beginning immediately upon the reagent being introduced into the system in admixture with the sample. Thus, in each of the prior art systems, the reagent is reactive with the sample immediately upon introduction into the system. Accordingly, such systems are not suitable for performing two-stage reactions, i.e. those in which a first reaction must be completed before a second reaction is commenced in accordance with the prior art, such reactions would require that the reagents be introduced at different points or locations along the system. This would require complication of the conduit system and, also, present severe phasing problems, particularly if the system were required to perform different analyses, on a random basis, along the same conduit. Such phasing problems would be especially severe in high flow rate systems using small volumes of sample. For these reasons, prior art systems have generally been adapted only to perform single-stage reactions.

We have now devised a method of continuous flow which is particularly adapted for use in analytical systems, whereby two stage reactions can be performed whilst still maintaining separation of successive samples, so avoiding carryover. Thus, in accordance with the present invention, there is provided a method wherein a fluid stream is introduced into a first section of a conduit, the stream comprising a first fluid package including first and second liquid segments separated by an intervening first immiscible fluid segment, said first fluid package being separated in said stream from at least a third liquid segment by an intervening second immiscible fluid segment; and wherein said conduit also comprises in sequence a second and a third section, and wherein said stream is passed from said first section into said second section wherein the first and second liquid segments are caused to combine, and said stream is passed from said second section to said third section wherein said combined segments become completely mixed; whilst said package is maintained separate from said third liquid segment; whereafter said completely mixed segments are passed out of said third section; characterised in that, as said stream passes from said first section through said second section and through said third section, said first fluid package is maintained separate from said third liquid segment by said intervening second immiscible fluid segment.

The present invention does not require phased introduction of reagents at spaced points along the conduit or channel. All of the samples to be assayed and all the reagents required are introduced through a single aspirating probe. All tests for every sample, whether requiring a one-stage or two-stage reaction, are processed through a single analytical channel.

The present invention provides for the controlled or delayed intermixing of certain successive liquid segments, on-line, in continuous flow systems. Thus, the invention makes possible the delayed intermixing of separated liquid segments, such as by displacement, fragmentation or physical removal of intervening immiscible segments, at selected points along a conduit while flow of the liquid stream continues. Of the separated segments, one segment can be a sample while the segment with which it is combined can be a reagent, diluent or other liquid. Mixing of the combined segments is completed during flow along the remainder of the conduit, so as to deliver a completely mixed segment to succeeding elements of the system.

In the method of the invention, at least one of the first and second immiscible fluids is preferably a gas, most preferably air. In one preferred embodiment, the first immiscible fluid segment is smaller than the second immiscible fluid segment, and wherein the second section of the conduit has a diameter sufficient to render the first immiscible fluid segment non-occlusive but not the second, so that the first and second liquid segments combine in the second section but the package is maintained separate from the third liquid segment.

In the method of the invention, we prefer to provide a coating of a continuous film of a liquid which is immiscible with the fluid packages, and which preferentially wets the conduit, is provided on the inner surface of the conduit. Preferably, the continuous liquid film is of a fluorocarbon.

Apparatus which can be used to carry out the method of the present invention is described and claimed in our European specification no. 109278.

By "system" herein we mean not only apparatus in an operational condition, but also such apparatus which is not in an operational condition, i.e. which does not having working fluids therein.

In order that the invention may be more fully understood, preferred embodiments thereof will now be described, by way of example only, with reference to the accompanying drawings, wherein:

Figure 1 illustrates one embodiment of apparatus suitable for carrying out the method of the present invention.

Figure 2 is an enlarged view of the reagent dispenser illustrated in Figure 1.

Figure 3 is a detailed view of the metering assembly referred to in Figure 1.

Figure 3A illustrates one arrangement of separated segments in a conduit in accordance with the method of the invention.

Figures 4A—4E are sequential diagrammatic views illustrating the combination of separated liquid segments and immiscible segments along the conduit in accordance with a preferred embodiment of the invention.

Figures 5A—5C are sequential diagrammatic views illustrating the combination of separated liquid segments and immiscible segments along the conduit in accordance with another embodiment of the invention.

Figure 6 illustrates a further type of single channel continuous flow system which can be used for the method of the invention. In this system, related first and second reagents are respectively disposed in separate reagent dispensers on separate reagent turntables.

Figure 7 is an enlarged view of the reagent dispenser illustrated in Figure 6.

Although specific terms are used in the following description for clarity, they refer only to the particular embodiment(s) selected for illustration, and are not intended to limit the scope of the invention.

The method of the present invention is particularly suitable for use in continuous flow analyzers which are used to detect an analyte in a liquid sample. Sample fluids on which tests are performed can include biological, physiological, industrial, environmental and other types of liquids. Of particular interest are biological fluids such as whole blood, serum, plasma, urine, cerebrospinal fluid, broth and other culture media and supernatants as well as fractions of any of them. Physiological fluids of interest include infusion solutions, buffers, preservative or antimicrobial solutions, and the like. Industrial liquids include fermentation media and other processing liquids used, for example, in the manufacture of pharmaceuticals, dairy products and malt beverages. Other sources of sample fluid which are tested by conventional methods are contemplated as within the meaning of this term as used and can, likewise, be assayed in accordance with the invention.

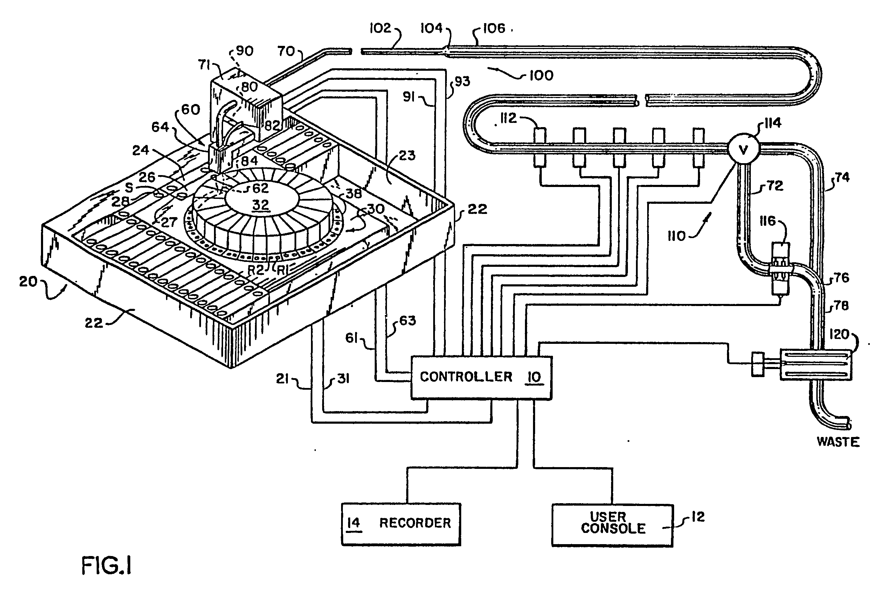

Referring now to Figure 1, controller 10 is a general purpose digital computer with a stored (fixed) program which is connected with user console 12 and recorder 14. User console 12 conventionally includes a cathode ray tube (CRT) terminal and keyboard. Recorder 14 conventionally includes a printer for recording the test data of each analysis. Controller 10 instructs, monitors and controls the sequence and coordination of system operations, as more fully described below, as well as calculates and monitors the quality of results and provides data output in a variety of formats.

Sample assembly 20 includes sample table 22 which holds a plurality of sample carrier blocks 24 and a shuttle carrier 26. Each such carrier block 24 carries a plurality of sample vessels 28 containing a body fluid sample S (e.g. serum). As directed by controller 10 along lead 21, sample blocks 24 are sequentially advanced, in a clockwise direction, so as to be successively positioned to present sample vessels 28 carried thereon, in turn, for aspiration. Adjacent carrier blocks 24, presented for aspiration, is shuttle carrier 26 which holds ancillary fluid vessels 27 containing ancillary fluids such as calibrators, dyes, controls, and the like. When the system has completed the necessary aspiration of sample S from all of the sample vessels 28 of a particular carrier block 24, that sample carrier block 24 is moved to a holding area 23 of sample table 22.

Reagent assembly 30 includes reagent turntable 32 connected to bidirectional rotational drive means (not shown). The drive means is activated by controller 10 along lead 31 connected to the non-illustrated drive means to impart a metered rotation of reagent turntable 32 to present a selected reagent dispenser 38 for aspiration. Reagent turntable 32 is provided with one row of reagent dispensers 38. Each of reagent dispensers 38 contains the components necessary to dispense the first reagent $R_1$ and the second reagent $R_2$ of two reagents necessary for two-stage reaction with a sample S. The drive means rotates turntable 32 slightly after aspiration of first reagent $R_1$ to present the second reagent $R_2$ for aspiration. Reagent dispenser 38 is described in more detail with reference to later drawings.

Probe assembly 60 includes probe 62 which aspirates sample, reagent and air into conduit 70. Probe 62 is carried at one end of probe arm 64, the other end of which is connected to bidirectional linear drive means (not shown). Directed by controller 10 along lead 61, the drive means imparts bidirectional horizontal movement of probe arm 64 to position probe 62 over a selected sample vessel 28, ancillary fluid vessel 27, or reagent dispenser 38 which has been presented for aspiration. Additionally, the drive means imparts bidirectional vertical movement, under control of controller 10 along lead 63, to probe 62 which is thereby lowered into sample vessel 28 or reagent dispenser 38 and, after aspiration, raised. Aspiration of fluids is effected by pumping means which is located at the downstream end of the system and is more fully described below. The aspirated liquid segments are passed along the conduit. Preferably, the inner surface of the conduit is coated with an immiscible liquid, such as described in Smythe et al, U.S. patent no. 3,479,141 to prevent undesirable carryover contamination.

Housing 71 encloses an immiscible liquid dispenser assembly 80 which includes a reservoir (not shown) which introduces immiscible liquid IL into the inlet of feed tube 82, the outlet of which connects to applicator shroud 84. Immiscible liquid IL is dispensed from applicator shroud 84 onto the outer surface of probe 62. Immiscible liquid IL preferably wets and forms a continuous film over the outer and inner surfaces of probe 62, the inner surface of conduit 70 and other conduits of the system to prevent the carryover contamination referred to above. In operation, probe 62 passes through a lens of immiscible liquid IL formed, manually or by an automated mechanism, on the surface of reagent liquids of reagent dispenser 38, as described with reference to later drawings, to aspirate an aliquot of reagent and immiscible liquid IL. The immiscible liquid IL which is thereby introduced into probe 62 replaces the immiscible liquid IL used throughout the analyzer and is, itself, replaced by immiscible liquid IL flowing down the outside of probe 62. For example, if probe 62, conduit 70 and other conduits of the system are formed of polytetrafluoroethylene, fluorocarbon can be used as immiscible liquid IL. This is described in greater detail in our European patent specification no. 109278.

Housing 71 also encloses metering apparatus 90 which uses segment position sensing in conjunction with flow-stopping valve(s) to control (meter) sample/reagent aspiration into conduit 70 so as to define a fluid package to perform a particular analysis. Multiple detectors (sensors) and valves can generate different segment patterns of air/liquid volumes. In a preferred embodiment, metering apparatus 90 aspirates, in order, (1) an aliquot of a sample to be analyzed, and (2) an aliquot of a first reagent, which combines with the sample aliquot in conduit 70 to form a first liquid segment, i.e., the first stage of a two-stage reaction, (3) a small segment of air, (4) an aliquot of a second reagent which constitutes a second liquid segment, i.e., the second stage of a two-stage reaction, and (5) a large segment of air. Controller 10 coordinates the operation of assembly 20, reagent assembly 30, probe assembly 60 and immiscible liquid IL dispenser assembly 80 with each other and with metering assembly 90, an example of which is described in more detail with reference to later drawings. Each fluid package contains the components necessary for one of the many individual analyses which can be performed on a particular sample. Multiple aliquots of a particular sample can be aspirated, each in association with a separate test package containing reagents appropriate for the analysis of interest. Successive test packages are thereby established containing reagents for analyses which can be selected in any order.

Segment combining zone 100 includes a narrow section 102 through which segments, established as described above, flow sequentially into expanding diameter flotation zone 104 and, thereafter, to an enlarged mixing zone 106. The final diameter of flotation zone 104 is equal to that of mixing zone 106. The first liquid segment comprising a mixture of the first reagent and the sample, enters flotation zone 104. The succeeding small air segment, which is of insufficient volume to occlude flotation zone 104 enters, becomes buoyant in and floats to the top of flotation zone 104. Thereafter, the second liquid segment, comprising the second reagent or a diluent for the first segment enters flotation zone 104 and begins to mix with the first liquid segment, forming a new segment which is the combination of the two, previously separated, liquid segments. Following combination of the liquid segments, mixing of and the reaction between sample, first reagent and second reagent segments begin. The succeeding large air segment enters flotation zone 104 and is of sufficient volume to occlude such zone. The large air segment coalesces with the small non-occluding air segment therein. The "combined" air segment and combined liquid segments enter enlarged section 106. The combined liquid segments are continually mixed during travel through subsequent portions of the system and are thereafter analyzed. The "combined" air segment serves to maintain successive combined liquid segments, each resulting from a test package, discrete during flow along the system. This sequence of events and alternate embodiments are described in further detail with reference to later drawings.

The successive combined liquid segments, separated from each other by an occluding air segment, flow through conduit 70 and into detector assembly 110, which includes a series of colorimeters 112, a bypass valve 114 and an ion-specific electrode 116. Colorimeters 112 are selectively activated by controller 10 based on the type of analysis to be performed. Static or kinetic assays, using one or more of colorimeters 112, can be performed over a broad spectrum of wavelengths. Bypass valve 114 directs flow of a test package to branch conduit 74. Branch conduits 72 and 74 come together at juncture 76, which is connected to pump tube 78 of peristaltic pump 120. Peristaltic pump 120 operates to provide the motive force for pulling all fluids into and through the system. Fluids which pump 120 has pulled through the system are passed to waste.

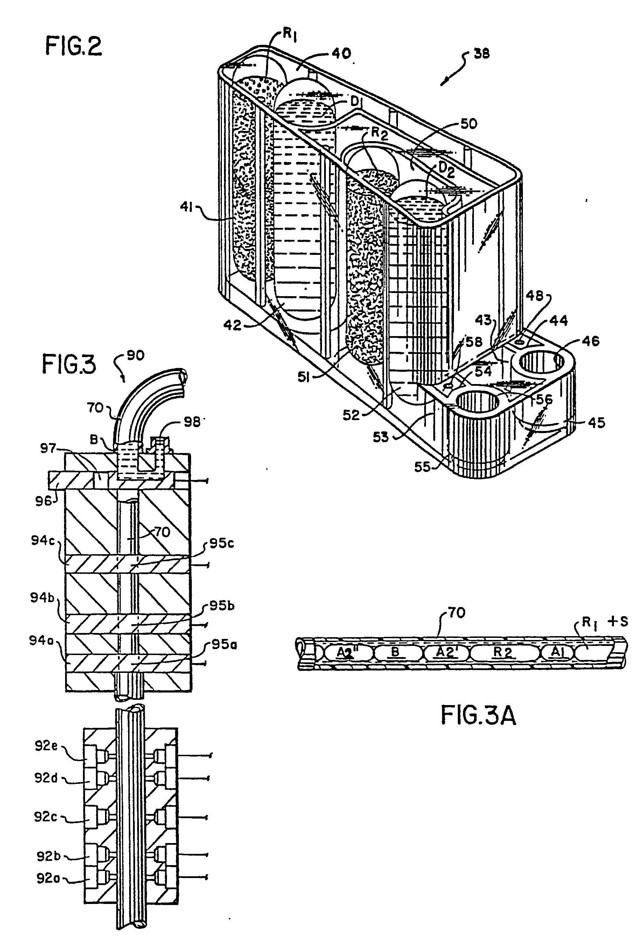

Fig. 2 illustrates two-reagent dispenser package 38 in greater detail. The reagent dispenser illustrated is of an inert material, such as plastic, and contains corresponding reagents $R_1$ and $R_2$ of a particular assay composition. The components of dispenser 38 which relate to reagents $R_1$ and $R_2$ are substantially identical, but for their position. Reagent dispenser 38 includes two reagent supply compartments 40 and 50, each of which encloses two breakable capsules. Capsules 41 and 51 contain lyophilized reagents $R_1$ and $R_2$, respectively. Capsules 42 and 52 contain reconstituting diluents $D_1$ and $D_2$, both of which are usually buffers. Reagent dispenser 38 has flexible side walls which permit external pressure to break reagent capsules 41 and 51 and reconstituting diluent capsules 42 and 52. This is done while reagent dispenser 38 is tilted on its back. It is then gently rocked to reconstitute and mix reagents $R_1$ and $R_2$ concurrently. When reagent dispenser 38 is righted and positioned on a turntable, as shown in the drawing discussed above, reagents $R_1$ and $R_2$ flow through supply ports 43 and 53 into reagent troughs 44 and 54, respectively. At the outlet of reagent troughs 44 and 54 are filters 45 and 55. Reagents $R_1$ and $R_2$, respectively, pass through filters 45 and 55 into dispensing wells 46 and 56. A fluid level equilibrium is established between reagent supply compartments 40 and 50 and their respective dispensing wells 46 and 56. Both dispensing wells have a hydrophilic interior surface. The dimensions and hydrophilic surfaces of dispensing wells 46 and 56 combine with the wetting characteristics of reagents $R_1$ and $R_2$, respectively, to form a concave reagent meniscus in each well which is reliably suitable to position a drop of immiscible liquid thereon. A drop of immiscible liquid IL is positioned on each meniscus, either manually or from an immiscible liquid dispenser as described above. Immiscible liquid IL is immiscible with all other fluids in the system, including sample, reagent buffer and air and forms discrete lenses (so-called because of their shape) on the meniscus of reagents, $R_1$ and $R_2$, respectively, due to the balance of interfacial tensions of the three fluids (reagent, immiscible liquid and air) at the points of three-phase contact which constitute the periphery of the lens. These lenses are centrally located by the concave shape of each meniscus.

The analysis system probe (not shown), preferably made of a solid fluoropolymer, sequentially intersects an immiscible fluid lens and reconstituted reagent liquid, both of which are aspirated into the analysis system. During system operation, a certain amount of reagent is aspirated from dispensing wells 46 and 56. As this occurs, the level of reagent in reagent trough 44 and 54 is also lowered. When the level falls enough to partially expose either of supply ports 43 and 53 to air, air flows into respective reagent supply compartments 40 and 50 to replace that volume of reagent which is permitted to flow out into reagent troughs 44 or 54. Vents 48 and 58 allow introduction of air to troughs 44 and 54. Thus, the reagent levels in dispensing wells 45 and 56 remain within a range until the reagent supply is nearly depleted. Upon depletion of either of reagent $R_1$ or $R_2$, dispenser 38 is discarded. Reagent dispenser 38 is a preferred embodiment of the reagent package which is the subject of our European patent specification no. 109278.

Fig. 3 illustrates metering assembly 90 including (a) an array of position sensors 92a—92e, such as photodetectors, specific ones of which are programmed to detect the interface between a selected air segment and following liquid segment, and (b) stop valves 94a—94c and buffer valve 96 which are positioned a specified distance downstream of the array of position sensors. Stop valves 94a—94c, respectively form valve ports 95a—95c. Buffer valve 96 includes valve port 97 and buffer injection port 98 which introduces buffer B from a reservoir (not shown) into conduit 70 so as to bisect the large air segment of each test package.

The volume of each aspirated segment is established by the position of the appropriate one of detectors 92a—92e relative to the point of aspiration, the inlet end of the probe. A pulse is generated by the appropriate one of detectors 92a—92e which is carried to controller 10 along line 91. In response thereto, a stored program in controller 10 generates a signal along lead 93 to actuate the appropriate one of stop valves 94a—94c and buffer valve 96, which stops aspiration of fluid through the probe by traversing conduit 70 through an air segment. Since the valve cuts through air only, no fluid is handled by this action and carryover, i.e., contamination between succeeding liquid segments, is prevented. As selected large air segments pass through conduit 70 at buffer valve 96, the valve is actuated to bisect the air segment by introducing a segment of buffer B through buffer injection port 98.

Fig. 3A illustrates one preferred embodiment of a fluid "test package" established by the metering apparatus of Fig. 3 and including, in order, a sample S segment which combines as shown with first reagent $R_1$ segment, small air segment $A_1$, a second reagent $R_2$ segment and a large air segment $A_2$, which is divided into equal segments $A_2{}'$ and $A_2{}''$ by a segment of buffer B. The introduction of buffer B further ensures against unwanted carryover. Sample S is first aspirated and, immediately thereafter, reagent $R_1$ is aspirated with no intervening air segment. These two liquids are thus permitted to commingle and form a substantially homogeneous single segment. The two reagents, $R_1$ and $R_2$, are introduced in substantially equal amounts, usually about 7.0 microliters (µl). The volume of aspirated sample S is much less than that of either reagent, usually about 1.0 µl. The volume ratio of the small and large air segments is preferably about 1:10, rather than the proportions used for illustration, and usually about 0.5 µl : 5.0 µl. The aliquot of buffer B is usually about 2.0 µl.

Successive test packages are thus created and flowed along a single channel of a continuous flow analytical system. The metering apparatus and method of providing the successive "test packages" are more fully described in our copending European patent specification no. 109198.

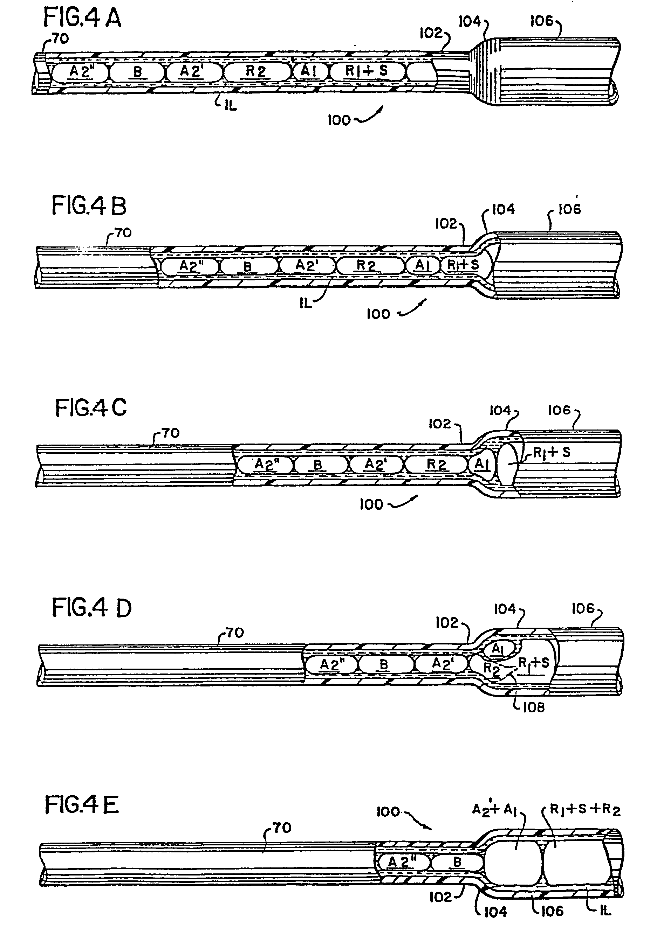

Figs. 4A—4E depict the passage of the related segments of a single test package from the narrow section 102 of a segment combining zone 100, through a flotation zone 104, and into an enlarged mixing section 106. The ratio of the inner diameters of narrow section 102 and enlarged mixing section 106 can be from about 1:1.5 to about 1:3. The inner surface of conduit 70, incuding segment combining zone 100, is coated throughout with an immiscible liquid IL, which preferentially wets the inner surface, preventing contact of a segment therewith.

The segments so created are shown, in order, at a cut-away portion of conduit 70. Sample S and first reagent $R_1$ have been combined, as described, to form a single segment $R_1$+S. Small air segment $A_1$ follows segment $R_1$+S and keeps it separated from the second reagent segment $R_2$.

Second reagent segment $R_2$ is followed by the first portion $A_2{}'$ of the large air segment, buffer segment B and then the second portion $A_2{}''$ of the large air segment. Segments, $A_2{}'$, B and $A_2{}''$ keep the preceding reactive segments of each test package separated from subsequent test packages. The fluid stream is flowing in the direction indicated by the arrow, as depicted in Fig. 4A. As shown in Fig. 4B, the $R_1$+S segment flows into flotation zone 104 and is followed by small air bubble $A_1$.

Fig. 4C illustrates the movement of small air bubble $A_1$ into flotation zone 104. Small air bubble $A_1$ is losing contact with the lower surface of the inner wall and beginning to rise in the flotation zone 104. It is just after this point that occlusion is negated.

As shown in Fig. 4D, small air segment $A_1$ has ceased to occlude and floated to the top of flotation zone 104. Segment $R_2$ passes into flotation zone 104 and begins to mix with segment $R_1$+S, as shown by phantom line 108. A new segment, which is the combination of segments $R_1$+S and $R_2$, is thus formed. Following combination of the segments, mixing of and the reaction therebetween begins. Air segment $A_2{}'$ is about to enter flotation zone 104.

In Fig. 4E, small air segment $A_1$ has coalesced with air segment $A_2{}'$ to form air segment $A_2{}'$+$A_1$. The "combined" air and liquid segments followed by the segment of buffer B and air segment $A_2{}''$ travel through enlarged section 106, the combined liquid segment being continuously mixed as it travels. It is thereafter analyzed by a colorimeter or ion selective electrode.

The structure and procedure used in this embodiment can be applied to a series of such flotation zones along a conduit. For example, the mixed liquid segment formed by combining two segments, each having a different reaction mixture component, can be made to combine with another liquid segment which follows a "combined" air segment. To achieve this, another enlargement can provide a flotation zone in which the combined air segment is non-occluding. A liquid segment following the combined air segment is thereby caused to combine with the mixed liquid segment which was established at the first flotation zone.

In another embodiment, not illustrated, separated liquid segments, e.g., corresponding to $R_1$+S and $R_2$, are brought together by fragmenting the intervening air segment into a plurality of smaller bubbles. These small bubbles float freely in the segment which is the combination of the previously separated segments and do not occlude the conduit or interfere with mixing of components from the previously separated segments. Various techniques can be used to fragment the occluding air segment. These include, for example, physically striking the tubing, vibrating the tubing with external mechanical apparatus or vibrating the segment by passing disruptive energy waves, such as sound waves, therethrough.

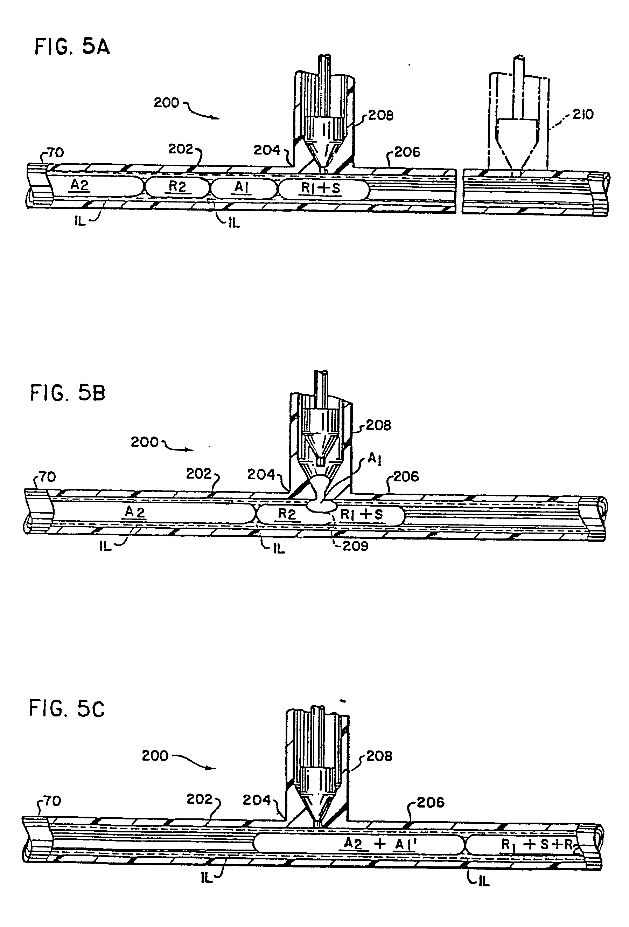

Yet another embodiment of the invention is contemplated which differs from the above embodiments by providing for the physical removal of at least a portion of the intervening air segment so as to render the same non-occluding. This may be accomplished by a semipermeable or porous section of conduit wall, any of a number of various valve arrangements, or other means, such as a debubbler, which connect with the flow path of the conduit. One example of this embodiment is illustrated by Figs. 5A—5C. Fig. 5A depicts the passage of a single test package from a first section 202 of a segment removal zone 200, through a second section 204, which contains a poppet valve 208, and into a third section 206. The inner surface of conduit 70 is coated throughout with immiscible liquid IL. The tip of the poppet valve conforms to or defines a portion of the inner wall surface of conduit 70 when in a closed position, to facilitate the reformation of the immiscible liquid IL layer. A liquid segment $R_1+S$, containing a first reagent $R_1$ and a sample S to be analyzed, is followed by a small air bubble $A_1$. Next is a liquid segment containing a second reagent $R_2$ which is reactive with liquid segment $R_1+S$ to provide a detectable response. The last segment is a large air segment $A_2$ which separates the above segments from the next successive test package.

Fig. 5B illustrates the passage of a portion of small air segment $A_1$ into second section 204. At this point, poppet valve 208 is operated, aspirating at least a portion of small air segment $A_1$, thereby rendering it non-occluding along the remainder of the conduit. The remaining portion of small air bubble $A_1$ has lost contact with the lower surface of the inner wall. Segment $R_2$ enters second section 204 and begins to mix with segment $R_1+S$, as shown by phantom line 209. A new segment is thus formed which is the combination of segments $R_1+S$ and $R_2$. Following combination of the liquid segments, mixing of and the reaction between $R_1$, $R_2$ and S begins. Large air bubble $A_2$ is about to enter second section 204.

In Fig. 5C, air bubble fragment $A_1'$ is all that remains of small air segment $A_1$. Air fragment $A_1'$ momentarily remains stationary, is contacted by and combines with large air segment $A_2$ to form combined air segment $A_2+A_1'$ which travels through the third section 206. The combined liquid segment is continuously mixed as it travels through third section 206. It is thereafter analyzed by any of numerous conventional methods. Some of which are identified below.

The structure and procedure used in this embodiment can be applied using a series of such aspiration apparatus along the same conduit. Referring again to Fig. 5A, a second poppet valve 210 (shown in phantom) is positioned downstream of poppet valve 208. Combined segment $R_1+S+R_2$ formed in the first test package can be made to later combine with another liquid segment or sequence of segments, which follows combined air segment $A_1+A_2$. Aspiration of a sufficient portion of combined air segment $A_1+A_2$

by operation of poppet valve 210 renders it non-occlusive. A liquid following air segment $A_2$ is thereby caused to mix with combined segment $R_1+S+R_2$, which was combined by operation of poppet valve 208.

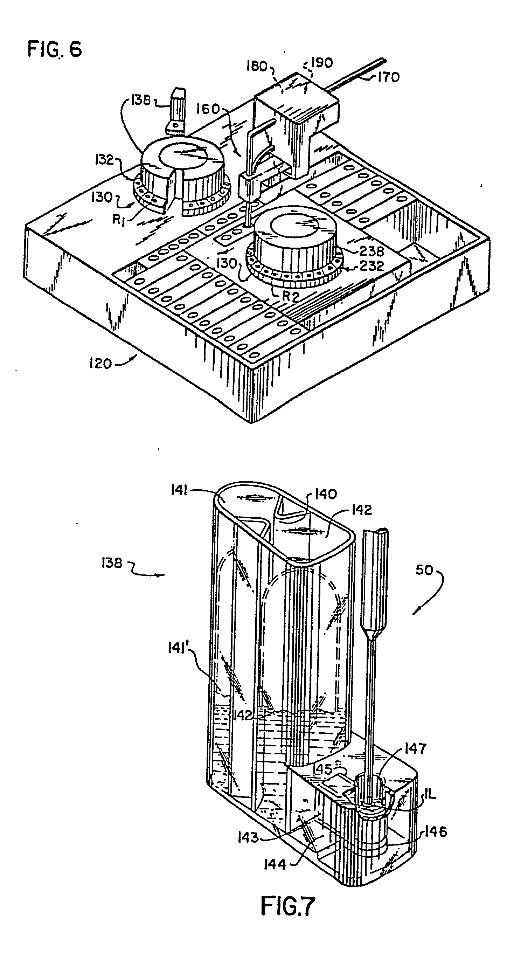

Fig. 6 illustrates an alternate embodiment of the front end of the system in which all of the first reagents $R_1$ for the assays to be performed are in single well reagent dispensers 138 positioned on a first reagent turntable 132 which is connected to bidirectional rotation drive means (not shown). All of the second reagents $R_2$ for the assays to be performed are in single well reagent dispensers 238 positioned on a second reagent turntable 232 which is connected to another bidirectional rotation drive means (not shown). The drive means are independently activated by a controller (not shown), such as the one previously described, to impart a metered rotation of reagent turntable 132 or 232 as needed to present a selected reagent dispenser 138 or 238, respectively, for aspiration of liquid therefrom and into conduit 170. As in previously described embodiments, a controller coordinates the operation of sample assembly 120, reagent assembly 130, probe assembly 160, immiscible liquid IL dispenser assembly 180 and metering assembly 190. Each of these components is substantially as described with reference to earlier drawings, as is the sequence of aspiration and system operation.

Fig. 7 illustrates reagent dispenser 138 in greater detail. The structure of reagent dispenser 238 is substantially identical, but for the reagent and reconstituting liquid packaged therein. Thus, reagent dispenser 138 will be described as exemplary of both. Reagent dispenser 138 includes a reagent reservoir 140 which encloses two breakable capsules 141 and 142, respectively containing lyophilized reagent 141' and reconstituting liquid 142', usually a buffer. Reservoir 140 has flexible side walls which permit external pressure to break capsules 141 and 142. When reagent dispenser 138 is positioned on a turntable, the reagent in reservoir 140 flows through port 143 into reagent trough 144, defined by side walls 145. At the other end of trough 144 is filter 146. A fluid level equilibrium is established between reservoir 140 and dispensing well 147.

A drop of immiscible liquid IL is positioned on the meniscus, either manually or from an immiscible liquid dispenser. Reagent dispenser 138 operates in the same manner as that described for either of the first reagent $R_1$ or second reagent $R_2$ dispensing components of the two reagent dispenser previously described. Reagent dispenser 138 is another preferred embodiment of the reagent package which is the subject of our European specification no. 109278.

The detector assembly provided in the system of the invention measures a characteristic of or other detectable response associated with the original sample by appropriate analytical techniques. Examples are electromagnetic radiation such as fluorescence, phosphorescence, chemiluminescence, changes in light absorption, reflectance or scattering in the visible, ultraviolet or infrared ranges. Also included is any observable change in a system parameter such as a change in or appearance of a reactant, observable precipitation or agglutination of any component in the reaction mixture as well as one which is detectable through the senses directly or by the use of ancillary detection means.

After the analytical result, such as a reaction product, is obtained as a detectable change, it is measured, usually by passing the reaction mixture through a zone in which suitable apparatus for reflection, emission transmission, scattering or fluorescence photometry is provided. Such apparatus serves to direct a beam of energy, such as light, through the conduit. The light then passes to a detector. Generally, electromagnetic radiation in the range of from about 200 to about 900 nanometers (nm) has been found useful for such measurements, although any radiation to which the conduit and reaction mixture are permeable and which is capable of quantifying the response provided can be used. Such detection means can include instruments such as spectrophotometers, ultraviolet light-sensing equipment, fluorometers, spectrofluorometers, nephelometers, turbidimeters, pH meters or electrodes.

## Claims

1. A continuous flow method wherein a fluid stream is introduced into a first section (102; 202) of a conduit (70), the stream comprising a first fluid package ($R_1+S$, $A_1$, $R_2$) including first ($R_1+S$) and second ($R_2$) liquid segments separated by an intervening first immiscible fluid segment ($A_1$), said first fluid package being separated in said stream from at least a third liquid segment (B) by an intervening second immiscible fluid segment ($A_2'$; $A_2$); and wherein said conduit (70) also comprises in sequence a second (104; 204) and a third section (106; 206), and wherein said stream is passed from said first section (102; 202) into said second section (104; 204) wherein the first ($R_1+S$) and second liquid ($R_2$) segments are caused to combine, and said stream is passed from said second section (104; 204) to said third section (106; 206) wherein said combined segments become completely mixed; whilst said package ($R_1+S+R_2$) is maintained separate from said third liquid segment (B); whereafter said completely mixed segments are passed out of said third section; characterised in that, as said stream passes from said first section (102; 202) through said second section (104; 204) and through said third section (106; 206), said first fluid package is maintained separate from said third liquid segment (B) by said intervening second immiscible fluid segment ($A_2'+A_1$; $A_2+A_1'$).

2. A method according to claim 1, wherein at least one of the first ($A_1$) and second immiscible fluids ($A_2'$; $A_2$) is a gas.

3. A method according to claim 2, wherein the gas is air.

4. A method according to claim 1, 2 or 3, wherein the first immiscible fluid segment ($A_1$) is smaller than the second immiscible fluid segment ($A_2'$; $A_2$), and wherein the second section (104) of the conduit (70) has a diameter sufficient to render the first immiscible fluid segment ($A_1$) non-occlusive but not the second ($A_2'$; $A_2$), so that the first ($R_1+S$) and second ($R_2$) liquid segments combine in the second section (104) but the package is maintained separate from the third liquid segment (B).

5. A method according to any of claims 1 to 4, wherein at least a portion of the first immiscible fluid ($A_1$) segment is removed from the conduit (70) as it passes through the second section (204).

6. A method according to any of claims 1 to 5, wherein a coating of a continuous film (IL) of a liquid which is immiscible with the fluid packages, and which preferentially wets the conduit (70), is provided on the inner surface of the conduit.

7. A method according to claim 6, wherein the continuous liquid film is of a fluorocarbon.

8. A method according to any preceding claim, wherein said third liquid segment (B) is part of another fluid package.

## Patentansprüche

1. Verfahren mit kontinuierlichem Durchfluß, in welchem ein Fluidstrom in einen ersten Abschnitt (102; 202) eines Kanals (70) eingeleitet wird, welcher Strom ein erstes Fluidpaket ($R_1+S$, $A_1$, $R_2$) umfaßt, welches erste ($R_1+S$) und zweite ($R_2$) Flüssigkeitssegmente einschließt, die durch ein dazwischen liegendes erstes nichtmischbares Fluidsegment ($A_1$) getrennt sind, wobei das erste Fluidpaket im Strom von zumindest einem dritten Flüssigkeitssegment (B) durch ein dazwischen liegendes zweites nichtmischbares Fluidsegment ($A_2'$; $A_2$) getrennt ist; und in welchem der Kanal (70) darüber hinaus in Aufeinanderfolge einen zweiten (104; 204) und einen dritten Abschnitt (106; 206) umfaßt, und in welchem dieser Strom vom ersten Abschnitt (102; 202) in den zweiten Abschnitt (104; 204) geführt wird, in welchem bewirkt wird, daß die ersten ($R_1+S$) und zweiten ($R_2$) Flüssigkeitssegmente kombinieren, und in welchem der Strom vom zweiten Abschnitt (104; 204) in den dritten Abschnitt (106; 206) geleitet wird, in dem die kombinierten Segmente vollständig gemischt werden; währenddessen das Paket ($R_1+S+R_2$) vom dritten Flüssigkeitssegment (B) getrenntgehalten wird, wonach die vollständig gemischten Segmente aus dem dritten Abschnitt herausgeleitet werden; dadurch gekennzeichnet, daß, sowie der Strom aus dem ersten Abschnitt (102; 202) durch den zweiten Abschnitt (104; 204) und durch den dritten Abschnitt (106; 206) geleitet wird, das erste Fluidpaket vom dritten Flüssigkeitssegment (B) durch das dazwischen liegende zweite nichtmischbare Fluidsegment ($A_2'+A_1$; $A_2+A_1'$) getrennt gehalten wird.

2. Verfahren nach Anspruch 1, in welchem zumindest eines des ersten ($A_1$) und zweiten nichtmischbaren Fluids ($A_2'$; $A_2$) ein Gas ist.

3. Verfahren nach Anspruch 2, in welchem das Gas Luft ist.

4. Verfahren nach Anspruch 1, 2 oder 3, in welchem das erste nichtmischbare Fluidsegment $(A_1)$ kleiner als das zweite nichtmischbare Fluidsegment $(A_2'; A_2)$ ist und in welchem der zweite Abschnitt (104) des Kanals (70) einen Durchmesser aufweist, der dazu ausreicht, das erste nichtmischbare Fluidsegment $(A_1)$, jedoch nicht das zweite $(A_2'; A_2)$, nichtokklusiv zu machen, so daß die ersten $(R_1+S)$ und zweiten $(R_2)$ Flüssigkeitssegmente im zweiten Abschnitt (104) kombinieren, jedoch das Paket vom dritten Flüssigkeitssegment (B) getrennt gehalten wird.

5. Verfahren nach einem der Ansprüche 1 bis 4, in welchem zumindest ein Teil des ersten nichtmischbaren Fluidsegments $(A_1)$ aus dem Kanal (70) entfernt wird, sowie es durch den zweiten Abschnitt (204) geleitet wird.

6. Verfahren nach einem der Ansprüche 1 bis 5, in welchem ein Überzug eines kontinuierlichen Films (IL) einer Flüssigkeit, die nichtmischbar mit den Fluidpaketen ist, und der vorzugsweise den Kanal (70) befeuchtet, auf der Innenfläche des Kanals vorgesehen ist.

7. Verfahren nach Anspruch 6, in welchem der kontinuierliche Flüssigkeitsfilm aus einem Fluorcarbon besteht.

8. Verfahren nach einem der vorhergehenden Ansprüche, in welchem das dritte Flüssigkeitssegment (B) Teil eines weiteren Fluidpakets ist.

## Revendications

1. Procédé d'écoulement continu dans lequel un flux de fluide est introduit dans une première section (102; 202) d'un conduit (70), le flux comprenant un premier bloc de fluide $(R_1+S, A_1, R_2)$ comprenant des premier $(R_1+S)$ et second $(R_2)$ segments liquides séparés par un premier segment de fluide non miscible interposé $(A_1)$, ledit premier bloc de fluide étant séparé dans ledit flux d'au moins un troisième segment liquide (B) par un second segment de fluide non miscible interposé $(A_2', A_2)$; et dans lequel ledit conduit (70) comporte également en succession une seconde (104; 204) et une troisième sections (106; 206), et dans lequel ledit flux est passé de ladite première section (102; 202) dans ladite seconde section (104; 204) dans laquelle les premier $(R_1+S)$ et second segments liquides $(R_2)$ sont amenés à se combiner, et ledit flux est passé de ladite seconde section (104; 204) à ladite troisième section (106; 206) dans laquelle lesdits segments combinés sont complètement mélangés; tandis que ledit bloc $(R_1+S+R_2)$ est maintenu séparé dudit troisième segment liquide (B); après quoi lesdits segments complètement mélangés sont extraits de ladite troisième section; caractérisé en ce que lorsque ledit flux passe de ladite première section (102; 202) à travers ladite seconde section (104; 204) et à travers ladite troisième section (106; 206), ledit premier bloc de fluide est maintenu séparé dudit troisième segment liquide (B) par ledit second segment de fluide non miscible interposé $(A_2'+A_1; A_2+A_1')$.

2. Procédé selon la revendication 1, dans lequel au moins l'un des premier $(A_1)$ et second fluides non miscibles $(A_2'; A_2)$ est un gaz.

3. Procédé selon la revendication 2, dans lequel le gaz est de l'air.

4. Procédé selon la revendication 1, 2 ou 3, dans lequel le premier segment de fluide non miscible $(A_1)$ est plus petit que le second segment de fluide non miscible $(A_2'; A_2)$, et dans lequel la seconde section (104) du conduit (70) possède un diamètre suffisant pour rendre le premier segment de fluide non miscible $(A_1)$ non obstruant, mais pas le second $(A_2'; A_2)$, de sorte que les premier $(R_1+S)$ et second $(R_2)$ segments liquides se combinent dans la seconde section (104) mais le bloc est maintenu séparé du troisième segment liquide (D).

5. Procédé selon l'une quelconque des revendications 1 à 4, dans lequel au moins une partie du premier segment de fluide non miscible $(A_1)$ est extrait du conduit (70) lorsqu'il traverse la seconde section (204).

6. Procédé selon l'une quelconque des revendications 1 à 5, dans lequel un revêtement d'un film continu (IL) d'un liquide qui n'est pas miscible avec les blocs de fluide, et qui mouille préférentiellement le conduit (70), est prévu sur la surface interne du conduit.

7. Procédé selon la revendication 6, dans lequel le film liquide continu est en fluorocarbone.

8. Procédé selon l'une quelconque des revendications précédentes, dans lequel ledit troisième segment liquide (B) est une partie d'un autre bloc de fluide.

CONTROLLER  10

14  RECORDER

USER CONSOLE  12

WASTE

FIG.1

FIG.2

FIG.3

FIG.3A

EP 0 200 235 B1

FIG.4 A

FIG.4 B

FIG.4 C

FIG.4 D

FIG.4 E

3

FIG. 5A

FIG. 5B

FIG. 5C

FIG. 6

FIG.7